# EUROPEAN PATENT APPLICATION

(11) **EP 1 835 669 A2**
(43) Date of publication of application: **19.09.2007**
(21) Application number: 06252663.7
(22) Date of filing: 22.05.2006
(51) Int. Cl.: H04L 12/56

(54) **Method of managing buffer in radio network control equipment and radio network control equipment**

(30) Priority: 22.02.2006 JP 2006045489
(71) Applicant: FUJITSU LIMITED, Kawasaki-shi, Kanagawa 211-8588 (JP)
(72) Inventor: Sugisaki, Hideyuki, c/o Fujitsu Limited, Kawasaki-shi Kanagawa 211-8588 (JP); Mita, Shingo, c/o Fujitsu Limited, Kawasaki-shi Kanagawa 211-8588 (JP)
(74) Representative: Stebbing, Timothy Charles

(57) **Abstract**

Radio network control equipment is stably operated regardless of occurrence of burst of control signals by counting the total number of control signals input to a buffer (211) receiving control signals in each multiplexer (210) in the radio network control equipment and the number of control signals transmitted from each cell in each unit time, and comparing the total number of control signals with a device threshold determined in accordance with the processing capacity of the multiplexer (210) in the unit time. Whenever a new control signal is input to each multiplexer, the number of control signals transmitted from each cell is compared with a guaranteed reception threshold which indicates a reception number to be guaranteed for a single cell in the unit time, and it is determined whether to ignore the control signal or to input it to the buffer (211) in every cell as a source of the new control signal on the basis of the comparison result.

## Description

The present invention relates to a MAC (Media Access Control) layer multiplexer included in radio network control equipment, in particular, to a technique for managing a reception load for control signals flowing through a plurality of base transceiver stations connected to radio network control equipment.

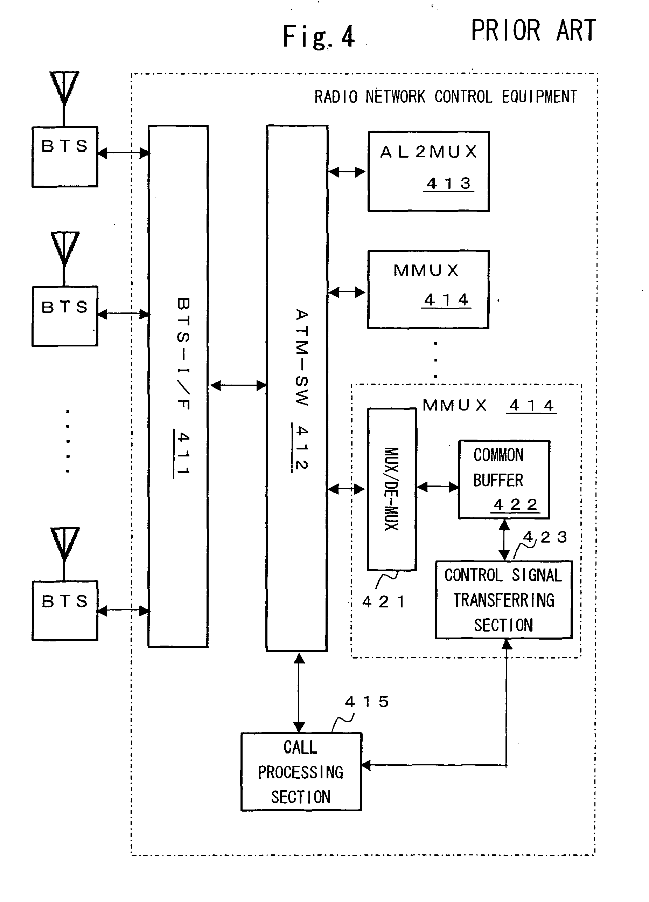

Fig. 4 shows an example of the configuration of radio network control equipment according to the related art.

In the radio network control equipment shown in Fig. 4, an ATM switch 412 connects a base transceiver station interface 411 connected to each base transceiver station. (BTS) under the radio network control equipment, an ATM adaptation layer 2 multiplexer (AL2MUX) 413, m number of MAC layer multiplexers (MMUX) 414, and a call processing section 41 5.

In the radio network control equipment as described above, the m number of MMUXs 414 reconstitute control signals (e.g. call origination requests) with respect to a plurality of cells which are assigned beforehand and notify the control signals to the call processing section 41 5. That is, the MMUXs 414 share processings with regard to control signals transmitted between each base transceiver station under the radio network control equipment and a mobile station.

In each of the MMUXs 414 shown in Fig. 4, a multiplex/de-multiplex section 421 is connected to a control signal transferring section 423 through a common buffer 422. A control signal transmitted from a base transceiver station with respect to each cell of a mobile telecommunication system assigned to each of the MMUXs 414 is supplied to the call processing section 415 through the common buffer 422 and the control signal transferring section 423 and is used in a process of the call processing section 41 5.

For data transmission after a connection with respect to a mobile station of a mobile telecommunication system is set, various technologies of managing a buffer with respect to data transmission have been proposed so as to control congestion while regarding QoS set for each connection (refer to Japanese Unexamined Patent Application Publication No. 2004-129051).

Since control signals related to call origination from a mobile station or a location registration of the mobile station originally do not need to be set with priorities, all of the control signals with respect to mobile stations within a cell assigned to the MMUX 414 flow into the common buffer 422 included in the MMUX 414 shown in Fig. 4.

The MMUX 414 according to the related art shown in Fig. 4 includes the common buffer 422 having enough capacity on the basis of traffic assumed for the control signal so as to secure impartiality with respect to a process of a control signal received from the base transceiver station.

However, when a failure occurs in a base transceiver station, erroneous signals may be continuously transmitted by the base transceiver station. Accordingly, the MMUX 414 taking charge of the corresponding cell may have excessive loads. In this case, the common buffer 422 included in the MMUX 414 may be depleted (filled up) and the MMUX 414 may stop functioning. If the MMUX 414 stops functioning, processing of control signals with respect to a cell corresponding to another base transceiver station assigned to the corresponding MMUX 414 may be stopped.

The same situation may occur when call origination requests are simultaneously and collectively transmitted in a place, such as a concert hall, where a large number of people gather, such that the MAC layer multiplex/de-multiplex section to which a cell corresponding to the place is assigned receives a burst of load.

In consideration of the excessive burst of load as described above, if extremely larger resources than an amount of resource necessary for ordinary situation are provided in the MAC layer multiplex/de-multiplex section, it is possible to prevent a failure from occurring due to the buffer depletion. However, it is wasteful to provide the excessive resources.

On the other hand, as described above, since the function stop of the MAC layer multiplex/de-multiplex section exerts a serious influence, it is required to provide a technology of securing the impartiality on the processing of control signals and preventing an MAC layer multiplex/de-multiplex section from ceasing to function.

Accordingly, it is desirable to provide a method of managing a buffer so as to stably operate radio network control equipment regardless of occurrence of reception bursts, and to provide radio network control equipment using the method.

It is further desirable to improve service quality for users of a mobile telecommunication system by avoiding a serious situation such as stoppage of the entire function of the multiplexer and maintaining a normal operation, even when a burst of control signals arrive from one of a plurality of cells assigned to a multiplexer.

Further, it is desirable to stably operate radio network control equipment without excessive resources such as a mass storage buffer in a multiplexer, regardless of the burstiness of control signals.

In addition, it is desirable to contribute to the maintenance of radio network control equipment by surely preventing buffer depletion in an MAC layer multiplexer and maintaining stable operation of the equipment regardless of control signal bursts due to a failure of a base transceiver station or simultaneous call origination from a large number of people at a concert or an event or the like.

Further, it is desirable to maintain service quality for users in a plurality of cells by an assigned MAC layer multiplexer's properly processing control signals in the cells regardless of the degree of burstiness of control signals.

In addition, it is desirable to effectively utilize the processing capacity of an MAC layer multiplexer by improving the service quality for users in a cell receiving the burst of control signals while maintaining the service quality for users in the other cells.

According to an aspect of the invention, there is provided a method of managing a buffer in radio network control equipment which, on the basis of a control signal transmitted between a plurality of base transceiver stations and the radio network control equipment, controls call processing to a mobile station in a plurality of cells by using a plurality of multiplexers. The plurality of cells are minimum units of mobile telecommunication control and included in an area corresponding to each of the base transceiver stations. The method includes a counting step of counting a total number of control signals input to a buffer provided in each multiplexer in the radio network control equipment to receive a control signal, and counting the number of control signals transmitted from each cell in each unit time; a total number comparing step of comparing the total number of control signals acquired in the counting step with a device threshold every time a new control signal is input to each of the multiplexers, the device threshold being determined in accordance with a processing capacity of the multiplexer in the unit time; a cell basis comparing step of comparing the number of control signals transmitted from each of the cells acquired in the counting step with a guaranteed reception threshold every time a new control signal is input to each of the multiplexers, the guaranteed reception threshold indicating a number of receptions of control signals to be guaranteed for a single cell in the unit time; a cell basis maximum comparing step of comparing the number of control signals transmitted from each of the cells acquired in the counting step with an allowable reception threshold, every time a new control signal is input to each of the multiplexers, the allowable reception threshold indicating a maximum allowable number of receptions of control signals in a single cell in the unit time, and a reception controlling step of determining, for each cell as a source of the new control signal, to abandon the new control signal or to input it to the buffer on the basis of a comparison result obtained in the total number comparing step, the cell basis comparing step, and the cell basis maximum comparing step.

Using the method according to the invention can realize flexible buffer management such that reception of a predetermined number of control signals are guaranteed in all of the cells assigned to the multiplexer while, with allowance of the processing capacity of the multiplexer taken into account, reception of the control signal is allowed in some cells until the number thereof reaches the allowable reception threshold.

According to another aspect of the invention, there is provided first radio network control equipment which, on the basis of a control signal transmitted between a plurality of base transceiver stations and the radio network control equipment, controls call processing to a mobile station in a plurality of cells by using a plurality of multiplexers. The plurality of cells are included in an area corresponding to each of the base transceiver stations. The radio network control equipment includes a buffer that is provided in each multiplexer included in the radio network control equipment to receive a control signal; a cell basis reception counting unit that counts, for each cell as a source, a number of control signals input to the buffer in each unit time; a cell basis comparing unit that compares a result of the counting for each cell acquired by the cell basis reception counting unit with a guaranteed reception threshold, every time a new control signal is input to each of the multiplexers, the guaranteed reception threshold indicating a number of receptions of control signals to be guaranteed for a single cell in the unit time; and a primary reception controlling unit that determines for each cell as a source of the new control signal, to abandon the control signal or to input it to the buffer on the basis of a comparison result acquired by the cell basis comparing unit.

By using the first radio network control equipment configured as described above according to the invention, it is possible to maintain a normal operation by certainly preventing congestion of the multiplexer regardless of bursts of control signals received from each of the cells while ensuring reception of a predetermined number of control signals in all of the cells assigned to the multiplexer.

According to still another aspect of the invention, there is provided second radio network control equipment which, on the basis of a control signal transmitted between a plurality of base transceiver stations and the radio network control equipment, controls call processing to a mobile station in a plurality of cells by using a plurality of multiplexers. The plurality of cells are included in an area corresponding to each of the base transceiver stations. The radio network control equipment includes a buffer that is provided in each multiplexer included in the radio network control equipment to receive a control signal; a total reception counting unit that counts a total number of control signals input to the buffer in each unit time; a total number comparing unit that compares a result of the counting acquired by the total reception counting unit with a device threshold, every time a new control signal is input to each of the multiplexers, the device threshold being determined in accordance with a processing capacity of the multiplexer in the unit time; and a secondary reception controlling unit that determines to abandon the new control signal when given from the total number comparing unit a comparison result indicating that the total number of receptions of control signals exceeds the device threshold.

The second radio network control equipment configured as described above according to the invention can limit reception of the control signals in accordance with the allowance of the processing capacity of the multiplexer, thereby certainly preventing the congestion of the multiplexer.

Preferably, the second radio network control equipment further includes a cell basis reception counting unit that counts, for each cell as a source, the number of control signals input to the buffer in each unit time; a cell basis maximum comparing unit that compares a result of the counting for each cell acquired by the cell basis reception counting with an allowable reception threshold, every time a new control signal is input to each of the multiplexers, the allowable reception threshold indicating a maximum allowable number of receptions in a single cell in the unit time; and a third reception controlling unit that, when the total number comparing unit indicates that the total number of receptions of control signals is less or equal to the device threshold, determines to abandon the new control signal or to input it from each of the cells to the buffer on the basis of the comparison result for each cell acquired by the cell basis maximum comparing unit.

By using third radio network control equipment configured as described above according to the invention, it is possible to utilize the processing capacity of the multiplexer at maximum and impartially receive the control signals in other cells assigned to the multiplexer by properly permitting the burst of control signals with a proper restriction only when the multiplexer has enough processing capacity.

According to yet another aspect of the invention, there is provided fourth radio network control equipment which, on the basis of a control signal transmitted between a plurality of base transceiver stations and the radio network control equipment, controls call processing to a mobile station in a plurality of cells by using a plurality of multiplexers. The plurality of cells are included in an area corresponding to each of the base transceiver stations. The fourth radio network control equipment includes a buffer that is provided in each multiplexer included in the radio network control equipment to receive a control signal; a total reception counting unit that counts a total number of control signals input to the buffer in each unit time; a cell basis reception counting unit that counts, for each cell as a source, the number of control signals input to the buffer in each unit time, a total number comparing unit that compares a result of the counting acquired by the total reception counting unit with a device threshold every time a new control signal is input to each of the multiplexers, the device threshold being determined in accordance with a processing capacity of the multiplexer in the unit time; a cell basis comparing unit that compares a result of the counting for each cell acquired by the cell basis reception counting unit with a guaranteed reception threshold, every time a new control signal is input to each of the multiplexers, the guaranteed reception threshold indicating reception number to be guaranteed for a single cell in the unit time; and a fourth reception controlling unit that, when given from the total number comparing unit the comparison result indicating that the total number of receptions control signals exceeds the device threshold, determines to abandon a new control signal arriving from a cell on which the cell basis reception counting unit has determined that control signals have been from the cell in number more than or equal to the guaranteed reception threshold.

By using the fourth radio network control equipment configured as described above according to the invention, since reception of the control signals from each cell is restricted only when the multiplexer loses allowance of the processing capacity it originally has, it is possible to utilize the processing capacity of the multiplexer while guaranteeing reception of the predetermined number of control signals in all of the cells assigned to the multiplexer.

Preferably, the fourth radio network control equipment further includes a cell basis maximum comparing unit that compares a result of the counting for each cell acquired by the cell basis reception counting unit with allowable reception threshold, every time a new control signal is input to each of the multiplexers, the allowable reception threshold indicating a maximum allowable number of receptions of control signals in a single cell in the unit time; and a third reception controlling unit that, when the total number comparing unit indicates that the total number of receptions of control signals is less or equal to the device threshold, determines to abandon the new control signal or to input it from each of the cells to the buffer on the basis of the comparison result for each cell acquired by the cell basis maximum comparing unit.

By using fifth radio network control equipment configured as described above according to the invention, since a reception processing for the burst of control signals arriving from some cells can be performed together with a reception processing for a predetermined number of control signals from the other cells assigned to the multiplexer, it is possible to secure a stable operation of the multiplexer.

In the fifth radio network control equipment, the cell basis maximum comparing unit may use, as the allowable reception threshold, a value obtained by dividing a reception number of system specification by the number of the multiplexers mounted in the radio network equipment. The reception number of system specification is a number which a processing unit integrally processing the control signals received through the plurality of multiplexers is able to process per unit time. The total number comparing unit may use, as the device threshold, a value obtained by multiplying the allowable reception threshold by a maximum capacity margin which is a value more than or equal to a numerical value '1'. The cell basis comparing unit may use, as the guaranteed reception threshold, a value obtained by dividing the device threshold by the number of cells included in each of the multiplexers.

Configuring the radio network control equipment as described above makes it possible to receive the burst of control signals with a proper restriction when the processing capacity of the MAC layer multiplexer has allowance, thereby achieving an improvement in service quality to users in the cell in which the burst is occurring as well as maintaining of the service quality to users in the other cells. As a result, it is possible to effectively utilize the processing capacity of the MAC layer multiplexer.

The nature, principle, and utility of the invention will become more apparent from the following detailed description when read in conjunction with the accompanying drawings in which like parts are designated by identical reference numbers, in which:
Fig. 1 is a block diagram of a MAC layer multiplexer according to an embodiment of the present invention;
Fig. 2 is a flowchart showing a buffer management operation;
Fig. 3 is a view showing a reception control operation; and
Fig. 4 is a block diagram showing an example of the configuration of radio network control equipment according to the related art.

### [Principles]

A method of managing a buffer in radio network control equipment according to the invention includes a counting procedure, a total number comparing procedure, a cell basis comparing procedure, a cell basis maximum comparing procedure, and a reception controlling procedure.

A principle of the method of managing a buffer in radio network control equipment according to the invention is as follows.

The method is of managing a buffer in radio network control equipment which, on the basis of a control signal transmitted between a plurality of base transceiver stations and the radio network control equipment, controls call processing to a mobile station in a plurality of cells by using a plurality of multiplexers, the plurality of cells being a minimum unit of mobile telecommunication control, and included in an area corresponding to each of the base transceiver stations. The counting procedure counts a total number of control signals input to a buffer and the number of control signals transmitted from each cell in each unit time. The buffer is provided for receiving a control signal in each multiplexer included in the radio network control equipment. The total number comparing procedure compares the total number of control signals acquired in the counting procedure with a device threshold every time a new control signal is input to each of the multiplexers. The device threshold is determined in accordance with a processing capacity of the multiplexer in the unit time. The cell basis comparing procedure compares the number of control signals transmitted from each of the cells acquired in the counting procedure with a guaranteed reception threshold every time a new control signal is input to each of the multiplexers. The guaranteed reception threshold indicates a number of receptions of control signal to be guaranteed for a single cell in the unit time. The cell basis maximum comparing procedure compares the number of control signals transmitted from each of the cells acquired in the counting procedure with an allowable reception threshold, every time a new control signal is input to each of the multiplexers. The allowable reception threshold indicates a maximum allowable number of receptions in a single cell in the unit time. The reception controlling procedure determines, for each cell as a source of the new control signal, to abandon the new control signal or to input it to the buffer on the basis of a comparison result acquired in the total number comparing procedure, the cell basis comparing procedure, and the cell basis maximum comparing procedure.

The operations by the method of managing a buffer in radio network control equipment constructed as described above are as below.

For example, the total number of the control signals and the number of control signals transmitted from each cell, which are counted during the unit time 1 second by the counting unit, are respectively compared with the device threshold, the guaranteed reception threshold, and allowable reception threshold by the total number comparing procedure, the cell basis comparing procedure, and the cell basis maximum comparing procedure in accordance with an input of a new control signal. And then, the comparison result is used in a process of the reception controlling procedure. As described below, the comparison results acquired by the total number comparing procedure, the cell basis comparing procedure, and the cell basis maximum comparing procedure are combined. In the reception controlling procedure, it is determined whether or not to receive the control signal of which the source is each cell and input the control signal to the buffer. Accordingly, it is possible to flexibly manage the buffer, for example, the control signal can be received to the allowable reception threshold with respect to some cell, by considering an allowance of the processing capacity of the multiplexer while securing reception of the predetermined number of control signals indicated by the guaranteed reception threshold.

First radio network control equipment according to the invention includes a buffer, a cell basis reception counting unit, a cell basis comparing unit, and a primary reception controlling unit.

A principle of the first radio network control equipment according to the invention is as follows.

The buffer is provided to receive a control signal in each multiplexer of radio network control equipment which controls call processing to a mobile station in a plurality of cells by using a plurality of multiplexers on the basis of a control signal transmitted between a plurality of base transceiver stations and the radio network control equipment. The plurality of cells are included in an area corresponding to each of the base transceiver stations. The cell basis reception counting unit counts the number of control signals input to the buffer for each cell as a source in each unit time. A cell basis comparing unit compares a result of the counting for each cell acquired by the cell basis reception counting unit with a guaranteed reception threshold every time a new control signal is input to each of the multiplexers. The guaranteed reception threshold indicates a reception number to be guaranteed for a single cell in the unit time. A primary reception controlling unit determines, for each cell as a source of the new control signal, to abandon the new control signal or to input it to the buffer on the basis of a comparison result acquired by the cell basis comparing unit.

The first radio network control equipment constructed as described above is operated as below.

A cell basis comparing unit compares the count value acquired in each cell by the cell basis reception counting unit with the guaranteed reception threshold. The comparison result is supplied to a reception controlling process by the primary reception controlling unit. If the cell basis comparing unit determines that, for example, the count value in a cell exceeds the guaranteed reception threshold, the primary reception controlling unit, upon determining occurrence of congestion, abandons and suppresses to input a control signal (rejects any further control signals) arriving from the cell in question to a buffer until the unit time for the above-described counting procedure elapses. Thus, it is possible to secure reception of the control signal to the guaranteed reception threshold in the unit time and prevent further control signals from being unlimitedly input to the buffer.

Second radio network control equipment according to the invention includes a buffer, a total reception counting unit, a total number comparing unit, and a secondary reception controlling unit.

A principle of the second radio network control equipment according to the invention is as follows.

The buffer is provided to receive a control signal in each multiplexer of radio network control equipment which controls call processing to a mobile station in a plurality of cells by using a plurality of multiplexers on the basis of a control signal transmitted between a plurality of base transceiver stations and the radio network control equipment. The plurality of cells are included in an area corresponding to each of the base transceiver stations.

The total reception counting unit counts a total number of control signals input to the buffer in each unit time. The total number comparing unit compares a result of the counting acquired by the total reception counting unit with a device threshold in the unit time every time a new control signal is input to each of the multiplexers. The device threshold is determined depending on a processing capacity of the multiplexer. The secondary reception controlling unit determines to abandon the new control signal when it receives from the total number comparing unit a comparison result indicating that the total number of receptions of control signals exceeds the device threshold.

The second radio network control equipment constructed as described above is operated as below.

The total number comparing unit compares the count value acquired by the total reception counting unit and the device threshold. The compared result is supplied to a reception controlling process by the secondary reception controlling unit. For example, when the total number comparing unit determines that the count value exceeds the device threshold, the secondary reception controlling unit determines that a congestion state exists in the multiplexer. Thereafter, the secondary reception controlling unit ignores any further control signals arriving in the multiplexer and suppresses input of control signals to the buffer until the unit time corresponding to the above-described counting procedure has elapsed. Thus, it is possible to secure reception of the entire control signal to the device threshold in the unit time and prevent further control signal from being unlimitedly input to the buffer.

Third radio network control equipment according to the invention includes a cell basis reception counting unit, a cell basis maximum comparing unit, and a third reception controlling unit in addition to the second radio network control equipment as described above.

A principle of the third radio network control equipment according to the invention is as follows.

In the second radio network control equipment as described above, the cell basis reception counting unit counts, for each cell as a source, the number of control signals input to the buffer in each unit time. The cell basis maximum comparing unit compares a result of the counting for each cell acquired by the cell basis reception counting unit with an allowable reception threshold every time a new control signal is input to each of the multiplexers. The allowable reception threshold indicates a maximum allowable number of receptions of control signals in a single cell in the unit time. Depending on whether the total number comparing unit indicates that the total number of receptions of control signals is less than or equal to the device threshold, the third reception controlling unit determines to abandon the new control signal or to input it from each of the cells to the buffer on the basis of the comparison result for each cell acquired by the cell basis maximum comparing unit.

The third radio network control equipment configured as described above is operated as below.

The cell basis maximum comparing unit compares the count value of each cell acquired by the cell basis reception counting unit with the allowable reception threshold. The comparison result is used in the reception controlling process of the third reception controlling unit. When the above-described secondary reception controlling unit determines that the multiplexer has allowance in the processing capacity, the third reception controlling unit determines whether the reception of the arriving burst of control signals can be allowed with respect to each cell on the basis of the comparison result acquired by the cell basis maximum comparing unit. Thereafter, the third reception controlling unit determines whether to allow inputting the received control signal to the buffer at each cell in accordance with the determination result. That is, with respect to cells in which the count value is less than or equal to the allowable reception threshold, the third reception controlling unit allows to input the control signal which arrives from the corresponding cell to the buffer. On the other hand, with respect to cells in which the count value exceeds the allowable reception threshold, the third reception controlling unit determines that the reception of the burst of control signals is more than the allowance limit. Thereafter, the third reception controlling unit abandons the control signal arriving from the corresponding cell so as to suppress to input the control signal to the buffer until the unit time corresponding to the counting procedure is terminated. Accordingly, it is possible to prevent control signals in excess of the device threshold from being unlimitedly input to the buffer in the unit time and it is also possible to prevent the buffer from being filed by a burst of control signals while partially allowing the burst of control signals to be received.

Fourth radio network control equipment according to the invention includes a buffer, a total reception counting unit, a cell basis reception counting unit, a total number comparing unit, a cell basis comparing unit, and a fourth reception controlling unit.

A principle of the fourth radio network control equipment according to the invention is as follows.

The buffer is provided to receive a control signal in each multiplexer of radio network control equipment which controls call processing to a mobile station in a plurality of cells by using a plurality of multiplexers on the basis of a control signal transmitted between a plurality of base transceiver stations and the radio network control equipment. The plurality of cells are included in an area corresponding to each of the base transceiver stations. The total reception counting unit counts a total number of control signals input to the buffer in each unit time. The cell basis reception counting unit counts, for each cell, as a source the total number of control signals input to the buffer in each unit time. The total number comparing unit compares a result of the counting acquired by the total reception counting unit with a device threshold every time a new control signal is input to each of the multiplexers. The device threshold is determined depending on a processing capacity of the multiplexer in the unit time. The cell basis comparing unit compares a result of the counting for each cell acquired by the cell basis reception counting unit with a guaranteed reception threshold, every time a new control signal is input to each of the multiplexers. The guaranteed reception threshold indicates a number of receptions of control signals to be guaranteed in a single cell in the unit time. When the total number comparing unit outputs a comparison result indicating that the total number of receptions of control signals exceeds the device threshold, the fourth reception controlling unit rejects any further control signals arriving from a cell on which the cell basis reception comparing unit has determined that the cell has received control signals in number more than or equal to the guaranteed reception threshold.

The fourth radio network control equipment constructed as described above is operated as below.

The cell basis comparing unit compares the count value for each cell acquired by the cell basis reception counting unit with the guaranteed reception threshold. In addition, the total number comparing unit compares the count value acquired by the total reception counting unit with the device threshold. The comparison result is used in the reception controlling process by the fourth reception controlling unit. When, for example, the total reception number is less than or equal to the device threshold, the fourth reception controlling unit determines that the multiplexer still has some available processing capacity. Only when the multiplexer has some capacity, the fourth reception controlling unit inputs a new control signal to a buffer even for a cell on which the cell basis comparing unit has determined that the count value exceeds the guaranteed reception threshold. On the other hand, when the total reception number exceeds the device threshold, the fourth reception controlling unit determines that the multiplexer does not have processing capacity left. In such case, with respect to a cell on which the cell basis comparing unit has determined that the reception number per cell exceeds the guaranteed reception threshold therein, the fourth reception controlling unit abandons the control signal arriving from the corresponding cell and suppresses input of the control signal to the buffer until the unit time for the above-described counting procedure elapses. Accordingly, when the multiplexer does not have processing capacity allowance it should have due to the arrival of a large number of control signals, it is possible to prevent the control signals in number which exceeds the guaranteed reception threshold from being unlimitedly input to the buffer while securing the reception of the control signals to the guaranteed reception threshold in the unit time.

Fifth radio network control equipment according to the invention is configured by adding a cell basis maximum comparing unit and a third reception controlling unit to the above-described fourth radio network control equipment.

A principle of the fifth radio network control equipment according to the invention is as follows.

In the fifth radio network control equipment, the cell basis maximum comparing unit compares a result of the counting for each cell acquired by the cell basis reception counting unit with an allowable reception threshold every time a new control signal is input to each of the multiplexers. The allowable reception threshold indicates a maximum allowable number of receptions of control signals in a single cell in the unit time. Depending on whether the total number comparing unit indicates that the total reception number is less or equal to the device threshold, the third reception controlling unit determines to abandon the new control signal or to input it from each of the cells to the buffer on the basis of the comparison result for each cell acquired by the cell basis maximum comparing unit.

The fifth radio network control equipment constructed as described above is operated as below.

When the above-described fourth reception controlling unit determines that the multiplexer has allowance of the processing capacity (i.e., available capacity), the third reception controlling unit determines whether the burst of control signals arriving from each of the cells can be received on the basis of the comparison result of the cell basis maximum comparing unit. In accordance with the determination result, the third reception controlling unit determines whether to allow inputting the received control signal to the buffer at each cell. Therefore, even when the multiplexer has allowance of the processing capacity, it is possible to prevent the buffer from being occupied by receiving the burst of control signals and secure the reception of the control signals until the number of the control signal reaches the guaranteed reception threshold in each cell by restricting the reception of the burst of control signals arriving from each cell on the basis of the allowable reception threshold.

A principle of the sixth radio network control equipment according to the invention is as follows.

In the sixth radio network control equipment, the cell basis maximum comparing unit uses, as the allowable reception threshold, a value obtained by dividing a reception number of system specification by the number of the multiplexers of the radio network equipment. The reception number of the system specification is a number which a processing unit integrally processing the control signals received through the plurality of multiplexers is able to process per unit time. The total number comparing unit uses, as the device threshold, a value obtained by multiplying the allowable reception threshold by a maximum capacity margin which is more than or equal to a numerical value '1'. The cell basis comparing unit uses, as the guaranteed reception threshold, a value obtained by dividing the device threshold by the number of the cells accommodated in each of the multiplexers.

The sixth radio network control equipment constructed as described above is operated as below.

As a way of example, here describes a case where when the burst of control signals arrive from a statistically expectable number of cells (for example, about 1 to 2) among cell groups assigned to the multiplexer. In this case, the total number of the control signals from the cells in which the burst is occurring and of the control signals input to the buffer from the other cells can be reduced to a value as much as double the device threshold by using the allowable reception threshold, guaranteed reception threshold, and device threshold as described above where the maximum capacity margin is set to a numerical value '2'. The received control signal suppressed as described above can be processed as long as there is no damage in the entire operation of the radio network control equipment by maximally using each of the resources included in the radio network control equipment.

### [Embodiments]

Next, the configuration of radio network control equipment according to the invention will be described in detail.

Hereinafter, an embodiment of the invention will be described in detail on the basis of the drawings.

### (First embodiment)

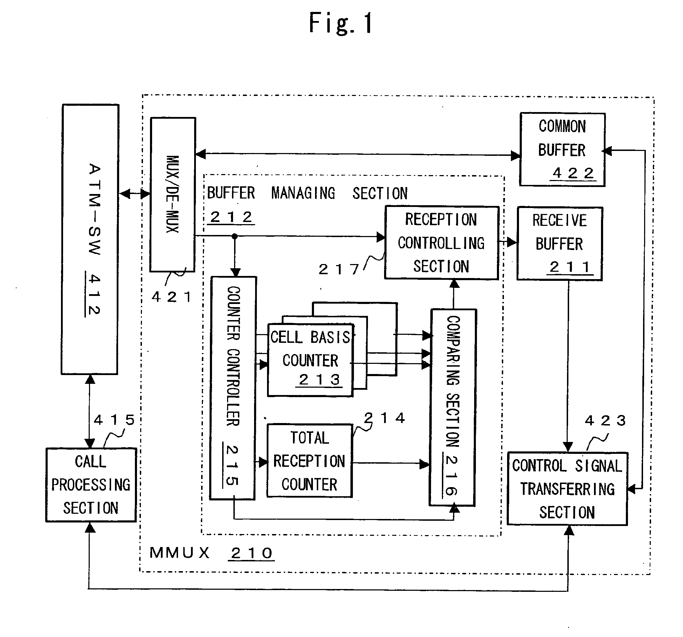

Fig. 1 is a block diagram of a MAC layer multiplexer according to an embodiment of the invention.

Among components shown in Fig. 1, the same parts with Fig. 4 are represented by the same reference numerals, and the descriptions thereof will be omitted.

An MAC layer multiplexer (MMUX) 210 shown Fig. 1 includes a receive-only receive buffer 211 and a buffer managing section 212 which controls input of control signals to the receive buffer 211 in addition to the common buffer 422 included in the MMUX 414 shown in Fig. 4.

The buffer managing section 212 shown in Fig. 1 includes a total reception counter 214 and a cell basis counter 213 provided so as to correspond to each of n number of cells assigned to the MMUX 210. The cell basis counter 213 and the total reception counter 214 perform a count operation in accordance with an indication from a counter controller 215.

Whenever a new control signal arrives in the MMUX 210, the counter controller 21 5 shown in Fig. 1 increases a count value of the total reception counter 214. Further, the counter controller 215, for example, determines which cell is the source of the control signal on the basis of a header of the control signal and increases count value of the corresponding cell basis counter 213. In addition, the counter controller 215 clears each of the count values of the total reception counter 214 and each cell basis counter 213 in every unit time (for example, 1 second).

With such operations, the total reception number of the control signals from all of the cells and a reception number of the control signals from each cell are counted in the unit time by the total reception counter 214 and the cell basis counter 213. The counted results are used in a process of a comparing section 216.

In addition, when the counter controller 215 informs that the count operation related to a new control signal is performed, the comparing section 216 shown in Fig. 1 compares the count value of each cell basis counter 213 and the count value of the total reception counter 214 with predetermined thresholds (which will be described later), respectively.

On the basis of the comparison result acquired by the above-described comparing section 216, a reception controlling section 217 shown in Fig. 1, as described below, determines whether to receive the newly received control signal, transmits a control signal determined to receive to a receive buffer 211, and abandons a control signal determined not to receive.

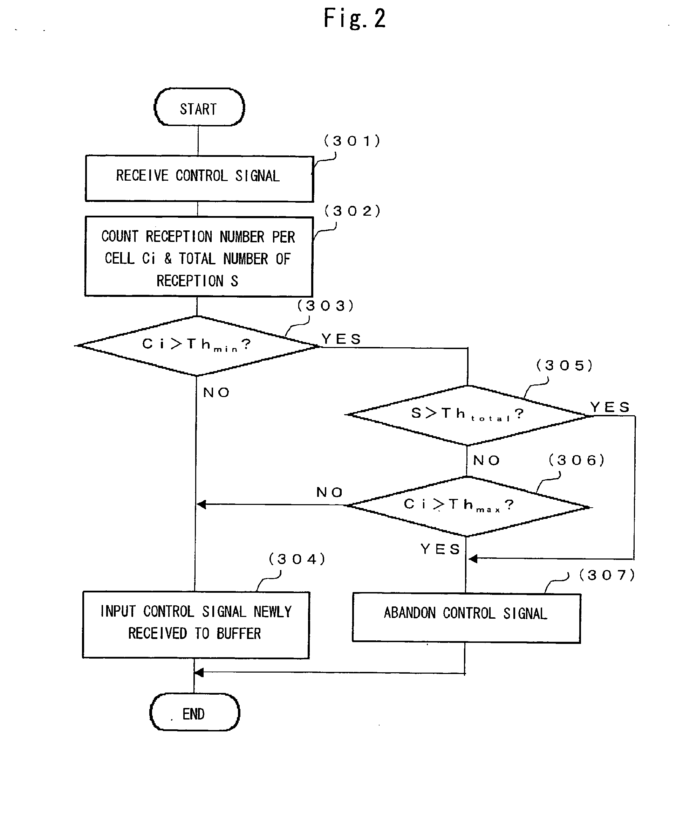

Fig. 2 is a flowchart showing a buffer management operation.

For example, if a control signal transmitted from a mobile station within an arbitrary cell i arrives in the MMUX 210 (steps 301), as described above, the total reception number S of the total reception counter 214 and a count value Ci of the cell basis counter 213 corresponding to the cell i increase (step 302).

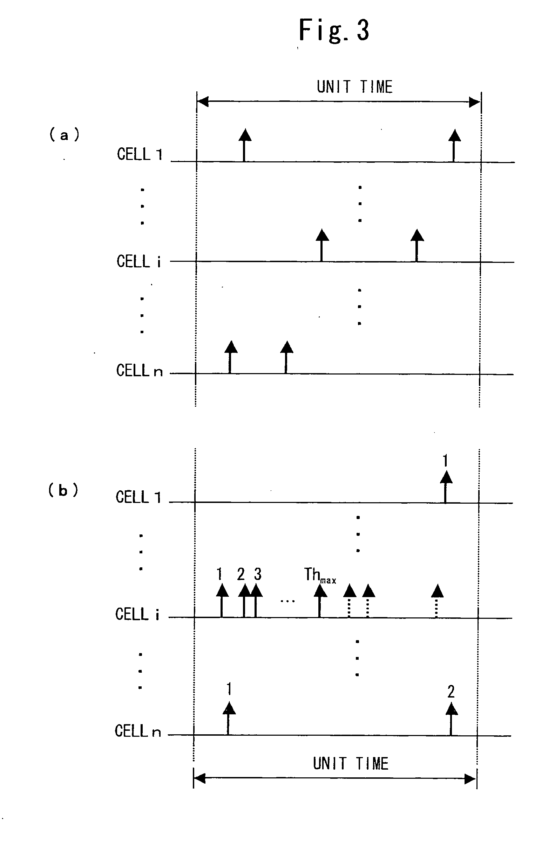

When the count value is updated in this way, the comparing section 216 compares the updated count value Ci of the cell basis counter 213 and a predetermined guaranteed reception threshold Thₘᵢₙ (step 303). As shown in Fig. 3A, when control signals uniformly arrive from each cell, it is preferable that the guaranteed reception threshold Thₘᵢₙ is determined by considering a specification value T related to the total number of the control signals to be processed in the MMUX 210 and the radio network control equipment.

When the comparing section 216 determines that the count value Ci of the cell basis counter 213 corresponding to the cell i is less than or equal to the guaranteed reception threshold Thₘᵢₙ (No in step 303), the reception controlling section 217 allows reception of the newly arrived control signal in step 301, inputs the control signal to the receive buffer 211 (step 304), and terminates the process.

Accordingly, when the number of the control signals arriving from the cell i within a unit time is less than or equal to the above-described guaranteed reception threshold Thₘᵢₙ, the control signal which has newly arrived from the cell i is definitely allowed to be received and stored in the receive buffer 211.

On the other hand, when the count value Ci corresponding to the cell i exceeds the guaranteed reception threshold Thₘᵢₙ (YES in step 303), the reception controlling section 217 determines whether a processing capacity of the MMUX 210 has allowance (spare capacity) on the basis of the comparison result between the count value S of the total reception counter 214 and the predetermined device threshold Thₜₒₜₐₗ by the comparing section 216 (step 305). As described later, it is preferable that the device threshold Thₜₒₜₐₗ is determined by considering number of the control signal which can be processed within the unit time (for example, 1 second) by the MMUX 210.

When it is determined that the count value S of the total reception counter 214 is less than or equal to the device threshold Thₜₒₜₐₗ (No in step 305), the reception controlling section 217 determines whether the count value Ci exceeds a reception limit from a single cell on the basis of the comparison result between the count value Ci of the cell basis counter 213 corresponding to the above-described cell i and the threshold of allowance reception Thₘₐₓ acquired by the comparing section 216 (step 306). As will be described later, it is preferable that the threshold of allowance reception Thₘₐₓ is determined by considering the case that burst of control signals arrive from a subset of the n number of cells (for example, 2) assigned to the MMUX 210.

When the comparing section 216 determines that the count value Ci of the cell basis counter 213 corresponding to the cell i is less than or equal to the allowable reception threshold Thₘₐₓ (No in step 306), the reception controlling section 217 allows to receive the newly arrived control signal in step 301, inputs the control signal to the receive buffer 211 (step 304), and terminates the process.

On the other hand, in accordance with YES determination in above-described steps 305 or 306, the reception controlling section 217 collects only logs of the newly arrived control signals in step 301, abandons the collected control signal (step S307), and terminates the process.

Accordingly, as shown in Fig. 3B, when a burst of control signals arrive from one (cell i in Figs. 3A and 3B) of the n number of cells assigned to the MMUX 210, the control signals are accepted up to the above described allowable reception threshold Thₘₐₓ (solid line arrow in Fig. 3B), and then further control signals (dotted line arrow in Fig. 3B) arriving from the cell i can be selectively abandoned. In addition, with the selective abandonment as described above, control signals incoming from other cells in which the count value of the corresponding cell basis counter 213 is less than or equal to the guaranteed reception threshold Thₘᵢₙ are continuously received (solid line arrow in Fig. 3B), and the processing of the control signals from the other cells is secured.

By performing the reception control operation, it is possible to prevent the receive buffer 211 from being occupied by the excessive load from the cell in which the burst of control signals occur and from being depleted. Accordingly, it is possible to stably maintain an operation of the MMUX 210 regardless of load in accordance with an erroneous signal occurring due to a failure of a base transceiver station or load occurring when receiving the burst of control signals unexpectedly in, for example, a concert hall.

Further, it is possible to maintain performance of the MMUX 210 with maximum use of various resources included in the MMUX 210 and the radio network control equipment by properly determining the above-described guaranteed reception threshold Thₘᵢₙ, the device threshold Thₜₒₜₐₗ, and allowable reception threshold Thₘₐₓ.

The specification value P corresponding to each item of equipment acquired by dividing the above-described specification value T by the number of MMUXs 210, K, mounted in the radio network control equipment indicates the number of control signal to be processed within the unit time at each MMUX 210. That is, when a control signal arrives from only one cell among n number of cells assigned to the MMUX 210, since the value P corresponding to respective equipment indicates the number of control signals which can be processed, the value P corresponding to the respective equipment is considered as the allowable reception threshold Thₘₐₓ related to reception of the burst of arriving control signals. On the other hand, the maximum number of control signals which can be processed within the unit time, that is, the device threshold Thₜₒₜₐₗ for determining the remaining processing capacity by using each MMUX 210, becomes a value obtained by multiplying the above-described value P corresponding to the respective equipment by an maximum capacity margin ratio M considering fluctuation of a receiving timing. In addition, the guaranteed reception threshold Thₘᵢₙ can be acquired by dividing the device threshold Thₜₒₜₐₗ by the number of cells 'n' assigned to each MMUX 210.

For example, if it is assumed that the specification value T related to the number of control signals processed in the radio network control equipment for every one second is 150, the maximum capacity margin ratio M is 2, and the number of cells 'n' assigned to each MMUX 210 is 50, the device threshold Thₜₒₜₐₗ becomes 100, the allowable reception threshold Thₘₐₓ becomes 50, and the guaranteed reception threshold Thₘᵢₙ becomes 2.

In such case, for example, as shown in Fig. 3B, when a burst of control signals arrives from one of the cells assigned to the MMUX 210 and the number of control signals corresponding to the guaranteed reception threshold Thₘᵢₙ arrives from the other cells, all of the control signals are received by the buffer managing section 212. Further, in such case, the number of control signals input to the receive buffer 211 becomes nearly equal to the device threshold Thₜₒₜₐₗ. Accordingly, in such case, the control signal received within the unit time (for example, 1 second) is certainly processed without delay.

In addition, in the above-described managing method, for example, when a burst of control signals substantially simultaneously arrives from two adjacent cells, the total number including the number of control signals which arrive and are received from the corresponding cells and the number of control signals which arrive and are received from the other cells reaches almost 4 times of the specification value P corresponding to above described equipment. However, when the processing load related to the received control signal is small in the call processing section 415 included in the radio network control equipment shown in Fig. 1, the number of the control signals corresponding to the above described number can be properly processed.

## Claims

1. A method of managing a buffer in radio network control equipment which, on the basis of a control signal transmitted between a plurality of base transceiver stations and the radio network control equipment, controls call processing to a mobile station in a plurality of cells by using a plurality of multiplexers, the plurality of cells being a minimum unit of mobile telecommunication control, and included in an area corresponding to each of the base transceiver stations, comprising:
a counting step of counting a total number of control signals input to a buffer and a number of control signals transmitted from each cell in each unit time, the buffer provided in each of said multiplexers in the radio network control equipment to receive a control signal;
a total number comparing step of comparing the total number of control signals acquired in the counting step with a device threshold, every time a new control signal is input to each of said multiplexers, the device threshold being determined in accordance with a processing capacity of each multiplexer in the unit time;
a cell basis comparing step of comparing the number of control signals transmitted from each of the cells acquired in the counting step with a guaranteed reception threshold, every time a new control signal is input to each of said multiplexers, the guaranteed reception threshold indicating a number of receptions of control signals to be guaranteed for a single cell in the unit time;
a cell basis maximum comparing step of comparing the number of control signals transmitted from each of the cells acquired in the counting step with an allowable reception threshold, every time a new control signal is input to each of said multiplexers, the allowable reception threshold indicating a maximum allowable number of receptions of control signals in a single cell in the unit time; and
a reception controlling step of determining, for each cell as a source of the new control signal, to abandon the new control signal or input it to said buffer, based on comparison results obtained in the total number comparing step, cell basis comparing step, and cell basis maximum comparing step.

2. Radio network control equipment which, on the basis of a control signal transmitted between a plurality of base transceiver stations and the radio network control equipment, controls call processing to a mobile station in a plurality of cells by using a plurality of multiplexers, the plurality of cells being included in an area corresponding to each of the base transceiver stations, comprising:
a buffer that is provided in each of the multiplexer in the radio network control equipment to receive a control signal;
a cell basis reception counting unit that counts, for each cell as a source, a number of control signals input to said buffer in each unit time;
a cell basis comparing unit that compares a result of the counting for each cell acquired by said cell basis reception counting unit with a guaranteed reception threshold, every time a new control signal is input to each of said multiplexers, the guaranteed reception threshold indicating a number of receptions of control signals to be guaranteed for a single cell in the unit time; and
a primary reception controlling unit that determines, for each cell as a source of the new control signal, to abandon the new control signal or to input it to said buffer on the basis of a comparison result acquired by said cell basis comparing unit.

3. Radio network control equipment which, on the basis of a control signal transmitted between a plurality of base transceiver stations and the radio network control equipment, controls call processing to a mobile station in a plurality of cells by using a plurality of multiplexers, the plurality of cells being included in an area corresponding to each of the base transceiver stations, comprising:
a buffer that is provided in each of said multiplexers in the radio network control equipment to receive a control signal;
a total reception counting unit that counts a total number of control signals input to said buffer in each unit time;
a total number comparing unit that compares a result of the counting acquired by said total reception counting unit with a device threshold, every time a new control signal is input to each of said multiplexers, the device threshold being determined in accordance with a processing capacity of each multiplexer in the unit time; and
a secondary reception controlling unit that determines to abandon the new control signal when given from said total number comparing unit a comparison result indicating that the total number of receptions of control signals exceeds the device threshold.

4. The radio network control equipment according to Claim 3, further comprising:
a cell basis reception counting unit that counts, for each cell as a source, the number of control signals input to said buffer in each unit time;
a cell basis maximum comparing unit that compares a result of the counting for each cell acquired by said cell basis reception counting unit with allowable reception threshold, every time a new control signal is input to each of said multiplexers, the allowable reception threshold indicating a maximum allowable number of receptions of controls signals in a single cell in the unit time; and
a third reception controlling unit that, when the total number comparing unit indicates that the total number of receptions of control signals is less or equal to the device threshold, determines to abandon the new control signal or to input it from each cell to said buffer on the basis of the comparison result for each cell acquired by said cell basis maximum comparing unit.

5. Radio network control equipment which, on the basis of a control signal transmitted between a plurality of base transceiver stations and the radio network control equipment, controls call processing to a mobile station in a plurality of cells by using a plurality of multiplexers, the plurality of cells being included in an area corresponding to each of the base transceiver stations, comprising:
a buffer that is provided in each of said multiplexers in the radio network control equipment to receive a control signal;
a total reception counting unit that counts a total number of control signals input to said buffer in each unit time;
a cell basis reception counting unit that counts, for each cell as a source, the number of control signals input to said buffer in each unit time;
a total number comparing unit that compares a result of the counting acquired by said total reception counting unit with a device threshold, every time a new control signal is input to each of said multiplexer, the device threshold being determined in accordance with a processing capacity of each multiplexer in the unit time;
a cell basis comparing unit that compares a result of the counting for each cell acquired by said cell basis reception counting unit with a guaranteed reception threshold, every time a new control signal is input to each of said multiplexer, the guaranteed reception threshold indicating a number of receptions of control signals to be guaranteed for a single cell in the unit time; and
a fourth reception controlling unit that, when given from said total number comparing unit a comparison result indicating that a total number of receptions of control signals exceeds the device threshold, determines to abandon the new control signal arriving from a cell on which the cell basis reception counting unit has determined that the cell has received control signals in number more than or equal to the guaranteed reception threshold.

6. The radio network control equipment according to Claim 5, further comprising:
a cell basis maximum comparing unit that compares a result of the counting for each cell acquired by said cell basis reception counting unit with allowable reception threshold, every time a new control signal is input to each of said multiplexers, the allowable reception threshold indicating a maximum allowable number of receptions of controls signals in a single cell in the unit time; and
a third reception controlling unit that, when the total number comparing unit indicates that the total number of receptions of control signals is less or equal to the device threshold, determines to abandon the new control signal or to input it from each cell to said buffer on the basis of the comparison result for each cell acquired by said cell basis maximum comparing unit.

7. The radio network control equipment according to Claim 6, further comprising
a processing unit integrally processing the control signals received through the plurality of multiplexers, wherein
said cell basis maximum comparing unit uses a value as the allowable reception threshold, the value being obtained by dividing a reception number of system specification by a number of the multiplexers mounted in the radio network control equipment, the reception number of system specification being a number which the processing unit is able to process per unit time;
said total number comparing unit uses, as the device threshold, a value obtained by multiplying the allowable reception threshold by a maximum capacity margin which is more than or equal to a numerical value '1'; and
said cell basis comparing unit uses, as a guaranteed reception threshold, a value obtained by dividing the device threshold by a number of cells assigned to each of said multiplexers.
